# EUROPÄISCHE PATENTSCHRIFT

(11) **EP 3 067 641 B1**
(45) Veröffentlichungstag und Bekanntmachung des Hinweises auf die Patenterteilung: **14.11.2018**
(21) Anmeldenummer: 16159467.6
(22) Anmeldetag: 09.03.2016
(51) Int. Cl.: F24S 40/52

(54) **SOLARABSORBER**
SOLAR ABSORBER
ABSORBEUR SOLAIRE

(30) Priorität: 09.03.2015 DE 102015103396
(43) Veröffentlichungstag der Anmeldung: 14.09.2016
(73) Patentinhaber: Viessmann Werke GmbH & Co. KG, 35108 Allendorf (DE)
(72) Erfinder: Hafner, Bernd, 35108 Allendorf (DE); Mercs, David, 57380 Faulquemont (FR); Beckmann, Michael, 66117 Saarbrücken (DE)
(74) Vertreter: Sperschneider, Alexandra

(56) Entgegenhaltungen:
- EP-A1- 2 604 585
- EP-A1- 2 679 555
- EP-A2- 2 514 724
- DE-A1- 4 433 863

## Beschreibung

Die Erfindung betrifft einen Solarabsorber gemäß dem Oberbegriff des Patentanspruchs 1.

Ein Solarabsorber der eingangs genannten Art ist aus dem Patentdokument DE 11 2011 103 911 T5 bekannt. Ein solcher thermischer Solarabsorber dient dazu, solare Wärme an ein mit dem Solarabsorber in Kontakt stehendes fluides Wärmeträgermedium zu übertragen, das dann seinerseits die aufgenommene Wärme zum Beispiel an ein Heizungssystem eines Gebäudes abgibt. Der in dem oben genannten Patentdokument genannte Solarabsorber besteht dabei aus einer mit einer thermochromen Schicht versehenen, metallischen Absorberfläche, wobei die thermochrome Schicht eine Beimischung, insbesondere Dotierung, mit einem metallischen Material aufweist. Die thermochrome Schicht ist vorgesehen, um die optischen Eigenschaften des Solarabsorbers in Abhängigkeit von der Temperatur beeinflussen zu können. Es besteht nämlich das Problem, dass das den Solarabsorber durchströmende Wärmeträgermedium (typischer Weise Wasser) aus Frostschutzgründen zum Beispiel mit Glykol versetzt ist und dass gerade dieses Frostschutzmittel empfindlich (zum Beispiel durch Zersetzung) auf zu hohe Temperaturen am Solarabsorber reagiert. Die thermochrome Schicht ist dabei dementsprechend so ausgebildet, dass sie ihre optischen Eigenschaften ab einer bestimmten Temperatur - auch kritische Temperatur genannt - ändert, so dass ein weiterer Wärmeeintrag ins Wärmeträgermedium ab Erreichen dieser Temperatur (jedenfalls erheblich) unterbunden wird. Als Material für eine solche thermochrome Schicht wird beispielsweise Vanadiumoxid verwendet. Zur gezielten Einstellung der kritischen Temperatur ist bei der oben genannten Lösung vorgesehen, die thermochrome Schicht mit eigenannten Lösung vorgesehen, die thermochrome Schicht mit einem metallischen Material zu dotieren (siehe auch Absatz [0040] des genannten Dokuments).

Der Erfindung liegt die Aufgabe zugrunde, einen Solarabsorber der eingangs genannten Art zu verbessern. Insbesondere soll ein Solarabsorber mit besonders gut an der Absorberfläche haftender thermochromer Schicht geschaffen werden, und zwar ohne dabei die vorgenannte Grundfunktion der thermochromen Schicht in relevanter Weise negativ zu beeinflussen.

Die D1 (DE 44 33 863 A1) offenbart eine spektralselektive Kollektorbeschichtung, welche Schichten aus dielektrischen und absorbierenden Materialien aufweist.

Diese Aufgabe ist mit einem Solarabsorber der eingangs genannten Art durch die im Kennzeichen des Patentanspruchs 1 aufgeführten Merkmale gelöst.

Nach der Erfindung ist also vorgesehen, dass die Beimischung, die besonders bevorzugt als Dotierung ausgebildet ist, absorberflächenseitig einen größeren Anteil an metallischem Material als absorberflächenabgewandt aufweist. Folglich weist die thermochrome Schicht einen Beimischungsgradienten auf, welcher in Richtung der Absorberfläche zunimmt. Dies hat den Vorteil, dass eine Haftverbesserung an der Kontaktfläche, also an der Grenzfläche, von thermochromer Schicht und Absorberfläche ausgebildet ist. Wird die thermochrome Schicht lediglich auf die Absorberfläche aufgebracht, ohne dass ein entsprechender Beimischungsgradient ausgebildet ist, so ist die Bindungseigenschaft zwischen Absorberfläche und thermochromer Schicht deutlich reduziert, da keine chemischen und/oder physikalischen Wechselwirkungen und/oder Bindungswirkungen zwischen Absorberfläche und thermochromer Schicht ausgebildet werden können. Weist allerdings die thermochrome Schicht einen Beimischungsgradienten auf, welcher in Richtung der Absorberfläche zunimmt, so bedingt der Beimischungsgradient eine zusätzliche Stabilisierung der Haftfestigkeit zwischen thermochromer Schicht und Absorberfläche. Die thermochrome Schicht wird somit in Richtung Absorberfläche chemisch immer ähnlicher mit dieser und nähert sich dieser chemisch an. Der Beimischungsgradient, vorteilhafter der Dotierungsgradient, bildet somit eine Materialangleichung aus.

Zudem ergibt der Beimischungsgradient, vorteilhafter der Dotierungsgradient, einen weichen, fließenden Übergang zwischen Absorberfläche und thermochromer Schicht. Auch dies verbessert die Haftfestigkeit der thermochromen Schicht an der Absorberfläche zusätzlich.

Vorliegend wird folglich auf eine scharfe Schichttrennung, zwischen Absorberfläche und thermochromer Schicht vollständig verzichtet. Eine derartige scharfe Schichttrennung bedeutet, dass die thermochrome Schicht auf der Absorberfläche derart aufgebracht ist, dass sich eine scharfe Grenzfläche zwischen beiden ausbildet, welche eine eindeutige Trennung und Differenzierung von Absorberfläche und thermochromer Schicht ermöglicht. Genau dies wird bei der vorliegenden Erfindung vermieden.

Mit anderen Worten zeichnet sich der erfindungsgemäße Solarabsorber somit insbesondere dadurch aus, dass einerseits durch den erhöhten Anteil an metallischem Material seitens der Absorberfläche dort für eine besonders gute Haftung der thermochromen Schicht auf der metallischen Absorberfläche gesorgt ist, andererseits gleichzeitig durch den niedrigeren Anteil an metallischem Material auf der absorberflächenabgewandten Seite der thermochromen Schicht deren für den Schutz des Wärmeträgermediums günstige Eigenschaften nicht beeinträchtigt wird. Besonders vorteilhaft erfolgt die Aufbringung der thermochromen Schicht zeitgleich mit deren Dotierung mittels PVD-Verfahren. Es ist allerdings auch denkbar, dass zunächst die thermochrome Schicht mittels PVD-Verfahren auf die Absorberfläche aufgebracht wird und eine amorphe Schicht ausbildet. Erst im Anschluss erfolgt die Dotierung der thermochromen Schicht mit wenigstens einem metallischen Material.

In diesem Zusammenhang hat es sich als besonders überraschend und vorteilhaft gezeigt, wenn die dotierte, thermochrome, amorphe Schicht - im Anschluss an das PVD-Verfahren - mit wenigstens einer vorbestimmbaren Temperatur (Temperaturbereich vorteilhaft im Bereich von 300 bis 650 °C) und/oder einem vorbestimmbaren Temperaturgradienten und/oder einer vorbestimmbaren Temperaturrampe (Zeit < 30 Minuten) beaufschlagt wird. Durch diesen Temperprozess wird ausreichend Temperatur von außen zugeführt, so dass es innerhalb der dotierten, thermochromen Schicht zur Ausbildung des Beimischungsgradienten und/oder des Dotierungsgradienten und/oder von metallischen Kristalliten und/oder von Vanadium-enthaltenden Kristalliten kommt. Folglich wird der Beimischungsgradient und/oder der Dotierungsgradient sowohl durch kontrollierte, gezielte Dotierung der thermochromen Schicht während und/oder nach dem PVD-Herstellungsverfahren erzeugt, als auch durch temperaturgesteuerte Diffusion des Dotierungsmaterials innerhalb der thermochromen Schicht während des Temperprozesses.

Besonders vorteilhaft dient der Temperprozess weiterhin zur Kristallitbildung innerhalb der thermochromen Schicht, wobei sich vorteilhaft der Anteil des metallischen Materials zur Dotierung und der Anteil des weiterhin vorliegenden Vanadium-enthaltenden Materials voneinander separieren und der Beimischungsgradient bzw. der Dotierungsgradient, welcher sich in Richtung der Absorberoberfläche vergrößert, ausgebildet wird.

Andere vorteilhafte Weiterbildungen ergeben sich aus den abhängigen Patentansprüchen.

Bei einer weiteren vorteilhaften Ausführungsform ist der Anteil an metallischem (Dotierungs-)Material in der thermochromen Schicht in Richtung Absorberfläche kontinuierlich zunehmend ausgebildet. Als besonders vorteilhaft hat sich ein Anteil an metallischem Dotierungsmaterial im Bereich 5 bis 15 Atomprozent in der thermochromen Schicht erwiesen, welcher gradientenartig auf >50 Atomprozent an der Absorberfläche ansteigt. Unter kontinuierlich zunehmend kann vorteilhaft verstanden werden, dass die Konzentration an metallischem Material innerhalb der thermochromen Schicht in Richtung der Absorberfläche stets zunimmt und an der Grenzfläche zur Absorberfläche die höchste Konzentration an metallischem Material aufweist. Dies ist von Vorteil, da hierdurch eine Haftungsverbesserung zwischen Absorberfläche und thermochromen Schicht erzielt werden kann, indem eine Materialangleichung durchgeführt wird.

Durch den erhöhten Anteil an metallischem Material in der Nähe der Absorberfläche sind vorteilhaft chemische und physikalische Wechselwirkungen zwischen metallischem Material und Absorberfläche ausgebildet, welche die Haftfestigkeit der thermochromen Schicht selbst deutlich erhöhen. Somit kann vorteilhaft die Lebensdauer des Solarabsorbers deutlich gesteigert werden, da ein unerwünschtes Schichtablösen, beispielsweise durch Korrosion, verhindert wird.

Bei einer weiteren vorteilhaften Ausführungsform ist die thermochrome Schicht aus mindestens zwei Teil-Schichten gebildet, wobei der jeweilige Anteil an metallischem Material in den Teil-Schichten in Richtung Absorberfläche zunehmend ausgebildet ist. Vorteilhaft sind die beiden Teil-Schichten übereinanderliegend angeordnet und/oder weisen beiden jeweils einen Beimischungsgradienten, vorteilhafter einen Dotierungsgradienten, auf. Weiterhin vorteilhaft werden die beiden Teilschichten in einem einzigen Schritt, aber nacheinander auf die Absorberfläche aufgebracht.

Erfindungsgemäß weist die thermochrome Schicht einen Anteil an Material in kristalliner Form auf. Unter kristalliner Form sind vorteilhaft wenigstens Kristallite, noch vorteilhafter Kristalle zu verstehen.
Besonders vorteilhaft ist der Anteil an Material in kristalliner Form an der Grenzfläche zwischen thermochromer Schicht und Absorberfläche angeordnet. Zur Haftverbesserung hat es sich als besonders vorteilhaft erwiesen, an und/oder nahe der Grenzfläche metallische Kristalle oder Kristallite auszubilden und/oder anzuordnen, welche mit der Absorberfläche in chemische und/oder physikalische Wechselwirkung treten und somit die Haftung zwischen der Absorberfläche und der thermochromen Schicht deutlich erhöhen und verbessern. Besonders vorteilhaft ist die Haftungsverbesserung durch chemische Metallbindungen zwischen der Absorberfläche und der thermochromen Schicht ausgebildet.
Weiterhin vorteilhaft liegt das Vanadium-enthaltende Material, unabhängig von seiner Oxidationszahl, ebenfalls zumindest teilweise in kristalliner Form vor. Besonders vorteilhaft sind die Vanadium-enthaltenden Kristalle und/oder Kristallite oberhalb der metallischen Kristalle und/oder Kristallite und somit weiter von der Absorberfläche entfernt angeordnet.

Bei einer weiteren vorteilhaften Ausführungsform weisen die Kristallite eine mittlere Korngröße von mindestens 10 nm auf. Als Größenbegrenzung hat es sich als vorteilhaft erwiesen, die Korngröße der Kristallite, vorteilhaft Vanadium inkl. Dotierungsmaterialien und/oder vorteilhaft der metallischen Kristallite und/oder Kristall und/oder der Vanadium-enthaltende Kristallite und/oderKristalle, deutlich geringer als die Schichtdicke der thermochromen Schicht auszubilden. Somit kann sichergestellt werden, dass trotz der teilweisen kristallinen Struktur innerhalb der thermochromen Schicht stets eine Gradienteneinstellung und/oder Gradientenausbildung, wie oben beschrieben, ausgebildet werden kann.

Unter metallischen Kristallen und Kristalliten sind Ionenkristalle bzw. Ionenkristallite zu verstehen, welche vorteilhaft metallische Kationen aufweisen, welche wiederum unter Ausbildung von Metallbindungen durch delokalisierte Elektronen stabilisiert sind. Die delokalisierten Elektronen sind zwischen den Metallkationen leicht verschiebbar und beweglich angeordnet, sodass sich ein entsprechend fester Zusammenhalt ergibt. Aus diesem Grund ist es besonders vorteilhaft, die metallischen Kristalle/ Kristallite in der Nähe der Absorberfläche anzuordnen, da diese ebenfalls einen metallischen Anteil aufweist, welcher mit den delokalisierten Elektronen der mit metallischen Kristalle/Kristallite in Wechselwirkung und Austausch treten kann. Hierdurch hat sich überraschenderweise gezeigt, dass die Haftfestigkeit zwischen thermochromer Schicht mit metallischen Kristallen und/oder Kristalliten und Absorberfläche deutlich verbessert werden kann.

Die ursprünglichen Eigenschaften der thermochromen Schicht, welche durch das Vanadium-enthaltende Material in unterschiedlichen Oxidationsstufen ausgebildet werden, bleiben von der Ausbildung der metallischen Bindungen unberührt.

Als besonders vorteilhaft haben sich mittlere Korngrößen im Bereich von 10 nm bis 75 nm, noch vorteilhafter von 11 nm, 12 nm, 13 nm, 14 nm, 15 nm, 16 nm, 17 nm, 18 nm, 19 nm, 20 nm, 21 nm, 22 nm, 23 nm, 24 nm, 25 nm, 26 nm, 27 nm, 28 nm, 30 nm, 31 nm, 32 nm, 33 nm, 34 nm und 35 nm, 36 nm, 37 nm, 38 nm, 39 nm, 40 nm, 41 nm, 42 nm, 43 nm, 44 nm , 45 nm 46 nm, 47 nm, 48 nm, 49 nm, 50 nm erwiesen. Insbesondere in den hier aufgeführten Bereich von 10 bis 50 nm sind die ausgebildeten Kristallite und/oder Kristalle ausreichend klein, damit bei Schichtdicken der thermochromen Schicht von mindestens 200 nm weiterhin ein ausreichender Gradient an metallischem Material erzeugt werden kann. Besonders vorteilhaft haben sich mittlere Korngrößen im Bereich von 10 bis 15 nm hierzu erwiesen. Die hier beschriebenen mittleren Korngrößen sind sowohl für die metallischen Kristallite, vorteilhafter für die metallischen Kristalle, als auch für die Vanadium-enthaltenden Kristallite, vorteilhafter Kristalle, anwendbar.

Besonders vorteilhaft weist die thermochrome Schicht einen kristallinen Anteil an Vanadium-enthaltenden Kristalliten und/oder Kristallen von größer 80 Volumen-%, vorteilhafter von größer 90 Volumen-% und noch vorteilhafter von größer 95 Volumen-% auf. Dieser hohe kristalline Anteil kann vorteilhaft durch den Temperprozess der zunächst amorphen, thermochromen Schicht erzeugt werden. Dieser hohe kristalline Anteil ist von Vorteil, da hierdurch eine besonders hohe thermische und chemische Stabilität der thermochromen Schicht erzeugt werden kann. Weiterhin hat nur das kristalline Vandadiumoxid in seiner Oxidationsstufe VO₂ die gewünschte thermochrome Eigenschaft.

Bei einer weiteren vorteilhaften Ausführungsform weist die thermochrome Schicht eine Dicke von mindestens 100 nm auf. Weiterhin vorteilhaft weist die thermochrome Schicht eine Dicke von maximal 1000 nm auf. Durch die Ausbildung der Schichtdicke von 100 nm bis 1000 nm kann sichergestellt werden, dass ein ausreichender Gradient in Richtung Absorberfläche ausgebildet werden kann, um die gewünschte Haftungsverbesserung auch gewährleisten zu können. Besonders vorteilhaft ist die Schichtdicke der thermochromen Schicht im Bereich von ¼ λ ausgebildet, wobei λ die auf den Solarabsorber eingestrahlte Wellenlänge ist, welche vorteilhaft im Infrarotbereich angesiedelt ist. Vorteilhaft sind folglich Schichtdicken der thermochromen im Bereich von 200 nm bis 750 nm.

Bei einer weiteren vorteilhaften Ausführungsform besteht die Absorberfläche wahlweise aus Aluminium, Kupfer oder dergleichen. Als besonders vorteilhaft hat sich die Ausbildung der Absorberfläche aus Aluminium, beispielsweise Aluminiumsblech gezeigt. Aluminium weist eine hervorragende Wärmeleitfähigkeit sowie ein geringes Eigengewicht auf. Dies ist für den hier beschriebenen Solarabsorber von Vorteil, da dieser somit effektiv, also mit einem hohen Wirkungsgrad, betrieben werden kann.

Bei einer weiteren vorteilhaften Ausführungsform besteht das metallische Material wahlweise aus Aluminium, Kupfer, Titan, Chrom, Eisen, Gallium oder dergleichen.

Bei einer weiteren vorteilhaften Ausführungsform ist das metallische Material zur Dotierung der thermochromen Schicht das gleiche wie das der metallischen Absorberfläche. Dies hat sich als erstaunlicherweise als vorteilhaft gezeigt, da hierdurch die metallischen Bindungen zwischen thermochromer Schicht und Absorberfläche deutlich stärker ausgebildet werden können.

Ist beispielsweise die Absorberfläche aus Kupfer ausgebildet und wird zugleich Kupfer als metallisches Material zur Dotierung ausgewählt, so ist das Kupfer an der Grenzfläche zwischen thermochromer Schicht und Absorberfläche in Form metallischer Kristallite, vorteilhafter Kristalle, ausgebildet. Folglich können durch die delokalisierten Metall-Elektronen Metallbindungen zwischen dem metallischen Material der thermochromen Schicht und der metallischen Absorberfläche ausgebildet werden, wodurch sich eine Haftungsverbesserung ergibt.

Um die Haftverbesserung zu erreichen, ist stets eine metallische Absorberfläche notwendig. Glas oder andere Materialien wie Kunststoffe müssen vorbehandelt, d.h. mit einer metallischen Schicht vorteilhaft aus Aluminium bedampft werden. Die Schichtdicke beträgt hierfür vorteilhaft über 20 nm.

Der Vollständigkeit halber wird noch auf das Patentdokument US 7,761,053 B2 hingewiesen, aus dem ebenfalls eine zur Einstellung der vorgenannten kritischen Temperatur dotierte thermochrome Schicht aus Vanadiumoxid bekannt ist.

Außerdem wird darauf hingewiesen, dass thermochrome Schichten zum Beispiel auch bei Sonnenschutzglasverglasungen eingesetzt werden, um den Effekt zu nutzen, dass thermochrome Materialien ihre Lichtabsorption in Abhängigkeit von der Temperatur ändern können (siehe hierzu auch: http://de.wikipedia.org/w/index.php? title=Intelligentes_Glas&oldid=131357527#Thermochromes_ Glas).

Neben der hier beschriebenen thermochromen Schicht auf der Absorberfläche ist es auch denkbar, auf der thermochromen Schicht wenigstens eine Antireflex-Schicht, beispielsweise aus Siliziumdioxid zusätzlich anzuordnen. Diese wenigstens eine Antireflex-Schicht kann beispielsweise mittels PVD-verfahren, Sol-Gel-Verfahren oder auch mittels Sputtern aufgebracht werden.

Darüber hinaus ist es auch denkbar, anstelle der wenigstens einen Antireflex-Schicht oder auf dieser wenigstens einen Antireflex-Schicht eine weitere Schicht zum Schutz des Solarabsorbers anzuordnen.

Es hat sich überraschenderweise gezeigt, die weitere Schicht vorteilhaft als Schutzschicht auszubilden, welche eine amorphe Struktur und/oder einen organischen Materialanteil enthält. Vorteilhaft ist diese Schutzschicht transparent ausgebildet und weist eine hohe Kratzfestigkeit und Stabilität gegenüber Feuchtigkeit auf. Besonders vorteilhaft ist der organische Materialanteil aus der Gruppe der Ester der Orthokieselsäure, beispielsweise Tetraethylorthosilicat oder Tetramethylorthosilicat, ausgewählt. Vorteilhaft erfolgt die Aufbringung dieser Schutzschicht über den Sol-Gel-Prozess.

Ferner betrifft die vorliegende Erfindung auch ein Verfahren zur Herstellung eines Solarabsorbers wenigstens die folgenden Schritte aufweisend:
- Aufbringen einer amorphen Schicht aus wenigstens einem Vanadiumoxid auf einer Absorberfläche;
- Dotierung der amorphen Schicht mit wenigstens einem metallischen Material;
- Erzeugung eines Dotierungsgradienten aus metallischen Material, welcher in Richtung der Absorberfläche zunimmt und Erzeugung von kristallinen Anteilen in der Schicht durch Temperaturbeaufschlagung.
Es ist auch denkbar, mit dem Aufbringen der amorphen Schicht diese auch zeitgleich mit wenigstens einem metallischen Material zu dotieren. Somit können die ersten beiden Verfahrensschritte zeitgleich stattfinden. Die Schicht aus wenigstens einem Vandadiumoxid und/oder aus wenigstens einem Vandadiumoxid mit Dotierung wird durch das PVD-Verfahren auf die Absorberfläche aufgebracht. Somit wird eine amorphe Schichtstruktur ausgebildet.
Die Temperaturbeaufschlagung wird in wenigstens einem Temperprozess durchgeführt, bei welchem der Solarabsorber mit einer vorbestimmbaren Temperatur in einer vorbestimmbaren Zeit beaufschlagt wird, damit sich die kristallinen Anteile und/oder der Dotierungsgradient ausbildet.
Der erfindungsgemäße Solarabsorber einschließlich seiner vorteilhaften Weiterbildungen gemäß der abhängigen Patentansprüche wird nachfolgend anhand der zeichnerischen Darstellung zweier Ausführungsbeispiele näher erläutert.
Es zeigt
- Figur 1: schematisch im Schnitt den Aufbau des erfindungsgemäßen Solarabsorbers;
- Figur 2: als Diagramm eine erste mögliche Anteilsverteilung des metallischen Materials in der thermochromen Schicht; und
- Figur 3: als Diagramm eine zweite mögliche Anteilsverteilung des metallischen Materials in der thermochromen Schicht.

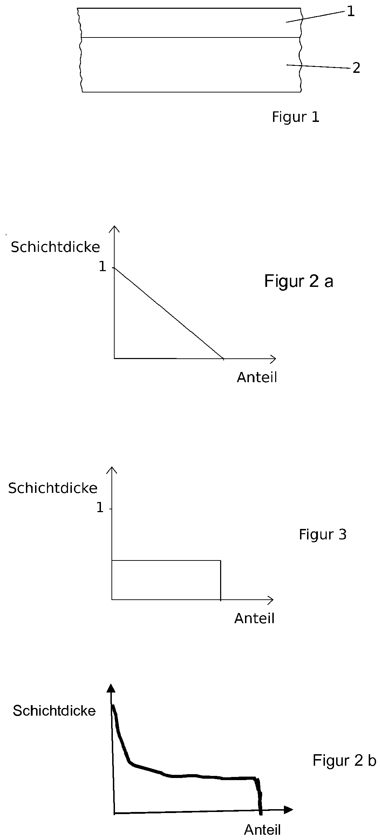

Der in Figur 1 schematisch dargestellte thermische Solarabsorber besteht in bekannter Weise aus einer mit einer thermochromen Schicht 1 versehenen, metallischen Absorberfläche 2, wobei die thermochrome Schicht 1 eine Beimischung, insbesondere Dotierung, mit einem metallischen Material, also insbesondere Metall oder Metalloxid, aufweist.

Unter Dotierung ist dabei das Einbringen von Fremdatomen in das Grundmaterial zu verstehen (siehe hierzu auch: http://de. wikipedia.org/w/index.php? title=Dotierung&oldid=137887179).

Bezüglich der insbesondere als Blech (also als flaches Walzwerkfertigprodukt) ausgebildeten Absorberfläche 2 ist dabei genauer betrachtet vorgesehen, dass diese wahlweise aus Aluminium, Kupfer oder dergleichen besteht.

Bezüglich der thermochromen Schicht 1 ist besonders bevorzugt vorgesehen, dass diese zur Absorption elektromagnetischer Strahlung mit einer Wellenlänge von 200 bis 2500 nm ausgebildet ist und/oder dass diese eine Dicke von mindestens 100 nm aufweist.

Nicht extra dargestellt, weil allgemein bekannt, sind auf der der thermochromen Schicht abgewandten Seite der Absorberfläche 2 angeordnete (zum Beispiel angelötete oder angeschweißte) Rohrleitungen zur Führung des eingangs genannten Wärmeträgermediums.

Wesentlich für den erfindungsgemäßen Solarabsorber ist nun, dass die Beimischung, insbesondere Dotierung, absorberflächenseitig einen größeren Anteil an metallischem Material als absorberflächenabgewandt aufweist.

Bezüglich der thermochromen Schicht 1 weist diese einen Anteil an Material (insbesondere Vanadiumoxid (VO, V₂O₃, VO₂, V₂O₅) - siehe hierzu auch: http://de.wikipedia.org/w/index.php?title=Vanadiumoxid& oldid=55814365 oder auch dotiertes Vanadiumoxid) in kristalliner Form auf, wobei ferner bevorzugt vorgesehen ist, dass Kristallite des Materials eine mittlere Korngröße von mindestens 10 nm aufweisen.
Bezüglich des genannten metallischen Materials zum Dotieren ist bevorzugt vorgesehen, dass dieses wahlweise aus Aluminium, Kupfer, Titan, Chrom, Eisen, Gallium oder dergleichen besteht. Um dabei eine besonders gute Haftung der thermochromen Sicht 1 auf der Absorberfläche 2 zu realisieren, ist weiterhin vorgesehen, dass das metallische Material zur Dotierung der thermochromen Schicht 1 das gleiche wie das der metallischen Absorberfläche 2 ist. Besteht also die Absorberfläche 2 aus Aluminium so wird auch mit Aluminium dotiert.
Bezüglich der Herstellung des erfindungsgemäßen Solarabsorber wird im übrigen darauf verwiesen, dass zur Dotierung der thermochromen Schicht die üblichen und dem Fachmann geläufigen Dotierverfahren verwendet werden können (siehe hierzu auch: http://de.wikipedia.org/w/index.php?title=Dotierung&oldid= 137887179#Dotierverfahren).
Mit Verweis auf Figur 2a ist nach einer ersten Ausführungsform des erfindungsgemäßen Solarabsorbers besonders bevorzugt vorgesehen, dass der Anteil an metallischem Material in der thermochromen Schicht 1 in Richtung Absorberfläche 2 kontinuierlich zunehmend ausgebildet ist. In Figur 2a ist dabei an der Ordinate die Schichtdicke dimensionslos aufgetragen (also laufende Ordinate ab Kontaktfläche zwischen der Absorberfläche 2 und der thermochromen Schicht 1 bezogen auf die Gesamtdicke der Schicht). Die Abszisse zeigt den (noch bedarfsweise festzulegenden) Anteil an metallischem Material in der thermochromen Schicht, der somit an der absorberflächenabgewandten Seite der thermochromen Schicht genau Null beträgt und zur Absorberfläche 2 hin kontinuierlich ansteigt. Der Anteilsabfall auf Null ist dabei nur beispielhaft gewählt; es kann selbstverständlich an der Oberfläche auch ein Anteil größer Null vorhanden sein, solange der Anteil absorberflächenseitig größer als absorberflächenabgewandt ausgebildet ist.

Daneben zeigt Figur 2b einen weiteren Konzentrationsverlauf des metallischen Materials einer Ausführungsform des hier beschriebenen Solarabsorbers. An der Ordinate ist die Schichtdicke dimensionslos aufgetragen (also laufende Ordinate ab Kontaktfläche zwischen der Absorberfläche 2 und der thermochromen Schicht 1 bezogen auf die Gesamtdicke der Schicht). Die Abszisse zeigt den (noch bedarfsweise festzulegenden) Anteil an metallischem Material in der thermochromen Schicht, der somit an der absorberflächenabgewandten Seite der thermochromen Schicht genau Null beträgt und zur Absorberfläche 2 hin ansteigt. Allerdings erfolgt die Zunahme hierbei nicht linear. An der absorberflächenabgewandten Seite erfolgt zunächst eine langsame Zunahme des Anteils an metallischem Material, welche dann in ein Plateau mündet. Vorteilhaft ist der metallische Materialanteil ab der Hälfte der Schichtdicke der thermochromen Schicht bis hin zur Absorberfläche 2 konstant (Plateau) zunehmend ausgebildet.

In Figur 3 ist schließlich eine weitere Ausführungsform des erfindungsgemäßen Solarabsorbers gezeigt, bei dem die thermochrome Schicht 1 aus zwei Teil-Schichten gebildet ist, wobei der jeweilige Anteil an metallischem Material in den Teil-Schichten in Richtung Absorberfläche 2 zunehmend ausgebildet ist: Im dargestellten Fall ist der Anteil an metallischem Material in der thermochromen Schicht 1 auf mehr als der Hälfte der Schicht Null, und zwar in dem absorberflächenabgewandten Bereich der Schicht 1, und konstant in einem absorberflächenzugewandten und somit für die Haftung besonders relevanten Bereich der Schicht 1. Eine solche Beschichtung kann dabei beispielsweise mit Hilfe eines Sol-Gel-Prozesses, durch Verdampfen, Sputtern oder durch plasmaunterstützte chemische Gasphasenabscheidung (PECVD), bei der beim Beschichten die Gaszusammensetzung geändert wird, erzeugt werden, wobei zunächst eine erste Schicht mit einer ersten Materialmischung mit einem größeren Anteil an Dotierungsmaterial und anschließend eine zweite Schicht mit einer Materialmischung mit einem kleinerem oder gar keinem Anteil an Dotierungsmaterial aufgebracht wird.

Selbstverständlich können bei der voranstehend beschriebenen Schichtenlösung auch mehr als zwei Schichten vorgesehen sein. Bildlich gesprochen, ergäbe sich dann eine treppenförmige Darstellung.

Schließlich sind von der Erfindung selbstverständlich auch solche Solarabsorber umfasst, die weitere Schichten wie Schutzschichten, Haftschichten und/oder Antireflexschichten aufweisen.

### Bezugszeichenliste

- 1: Thermochrome Schicht
- 2: Absorberfläche

## Patentansprüche

1. Solarabsorber, umfassend eine mit einer thermochromen Schicht (1) versehene, metallische Absorberfläche (2), wobei die thermochrome Schicht (1) eine Beimischung mit einem metallischen Material aufweist,
**dadurch gekennzeichnet,**
**dass** die Beimischung absorberflächenseitig einen größeren Anteil an metallischem Material als absorberflächenabgewandt aufweist, wobei die thermochrome Schicht (1) einen Anteil an Material in kristalliner Form aufweist.

2. Solarabsorber nach Anspruch 1,
**dadurch gekennzeichnet,**
**dass** die Beimischung in Form einer Dotierung ausgebildet ist.

3. Solarabsorber nach Anspruch 1 oder 2,
**dadurch gekennzeichnet,**
**dass** der Anteil an metallischem Material in der thermochromen Schicht (1) in Richtung Absorberfläche (2) kontinuierlich zunehmend ausgebildet ist.

4. Solarabsorber nach Anspruch 1 oder 2,
**dadurch gekennzeichnet,**
**dass** die thermochrome Schicht (1) aus mindestens zwei Teil-Schichten gebildet ist, wobei der jeweilige Anteil an metallischem Material in den Teil-Schichten in Richtung Absorberfläche (2) zunehmend ausgebildet ist.

5. Solarabsorber nach Anspruch 4,
**dadurch gekennzeichnet,**
**dass** Kristallite des Materials eine mittlere Korngröße von mindestens 10 nm aufweisen.

6. Solarabsorber nach einem der Ansprüche 1 bis 5,
**dadurch gekennzeichnet,**
**dass** die thermochrome Schicht (1) eine Dicke von mindestens 100 nm aufweist.

7. Solarabsorber nach einem der Ansprüche 1 bis 6,
**dadurch gekennzeichnet,**
**dass** die Absorberfläche (2) wahlweise aus Aluminium, Kupfer oder dergleichen besteht.

8. Solarabsorber nach einem der Ansprüche 1 bis 7,
**dadurch gekennzeichnet,**
**dass** das metallische Material wahlweise aus Aluminium, Kupfer, Titan, Chrom, Eisen, Gallium oder dergleichen besteht.

9. Solarabsorber nach einem der Ansprüche 1 bis 8,
**dadurch gekennzeichnet,**
**dass** das metallische Material zur Dotierung der thermochromen Schicht (1) das gleiche wie das der metallischen Absorberfläche (2) ist.

10. Verfahren zur Herstellung eines Solarabsorbers nach wenigstens einem der vorangegangenen Ansprüche wenigstens die folgenden Schritte aufweisend:
- Aufbringen einer Schicht (1) aus wenigstens einem Vanadiumoxid auf einer Absorberfläche (2);
- Dotierung der Schicht (1) mit wenigstens einem metallischen Material;
- Erzeugung eines Dotierungsgradienten aus metallischen Material, welcher in Richtung der Absorberfläche (2) zunimmt und Erzeugung von kristallinen Anteilen in der Schicht (1) durch Temperaturbeaufschlagung.

## Claims

1. Solar absorber comprising a metallic absorber surface (2) provided with a thermochromic layer (1), wherein the thermochromic layer (1) comprises an admixture with a metallic material, **characterised in that** the admixture has at the absorber surface side a larger proportion of metallic material than remote from the absorber surface, wherein the thermochromic layer (1) comprises a proportion of material in crystalline form.

2. Solar absorber according to claim 1, **characterised in that** the admixture is in the form of a doping.

3. Solar absorber according to claim 1 or 2, **characterised in that** the proportion of metallic material in the thermochromic layer (1) is formed to be continuously increasing in the direction of the absorber surface (2).

4. Solar absorber according to claim 1 or 2, **characterised in that** the thermochromic layer (1) is formed from at least two part layers, wherein the respective proportion of metallic material in the part layers is formed to be increasing in the direction of the absorber surface (2).

5. Solar absorber according to claim 4, **characterised in that** the crystallite of the material has a mean grain size of at least 10 nm.

6. Solar absorber according to any one of claims 1 to 5, **characterised in that** the thermochromic layer (1) has a thickness of at least 100 nm.

7. Solar absorber according to any one of claims 1 to 6, **characterised in that** the absorber surface (2) selectably consists of aluminium, copper or the like.

8. Solar absorber according to any one of claims 1 to 7, **characterised in that** the metallic material selectably consists of aluminium, copper, titanium, chromium, iron, gallium or the like.

9. Solar absorber according to any one of claims 1 to 8, **characterised in that** the metallic material for coping the thermochromic layer (1) is the same as that of the metallic absorber surface (2).

10. Method of producing a solar absorber according to at least one of the preceding claims, comprising at least the following steps:
- applying a layer (1) consisting of at least one vanadium oxide to an absorber surface (2);
- doping the layer (1) with at least one metallic material; and
- producing a coping gradient of metallic material which increases in the direction of the absorber surface (2) and producing crystalline components in the layer (1) by the action of temperature.

## Revendications

1. Absorbeur solaire, comprenant une surface d'absorbeur (2) métallique, dotée d'une couche thermochrome (1), la couche thermochrome (1) présentant un mélange avec un matériau métallique,
**caractérisé en ce que**
le mélange présente une proportion de matériau métallique plus élevée du côté de la surface de l'absorbeur que du côté opposé à la surface de l'absorbeur, la couche thermochrome (1) présentant une proportion de matériau sous une forme cristalline.

2. Absorbeur solaire selon la revendication 1,
**caractérisé en ce que**
le mélange est conçu sous la forme d'un dopage.

3. Absorbeur solaire selon la revendication 1 ou 2,
**caractérisé en ce que**
la proportion de matériau métallique dans la couche thermochrome (1) est conçue pour augmenter en continu en direction de la surface de l'absorbeur (2).

4. Absorbeur solaire selon la revendication 1 ou 2,
**caractérisé en ce que**
la couche thermochrome (1) est formée à partir d'au moins deux couches partielles, chaque proportion de matériau métallique dans les couches partielles étant conçue pour augmenter en direction de la surface de l'absorbeur (2).

5. Absorbeur solaire selon la revendication 4,
**caractérisé en ce que**
les cristallites du matériau présentent une taille moyenne de grains d'au moins 10 nm.

6. Absorbeur solaire selon l'une des revendications 1 à 5,
**caractérisé en ce que**
la couche thermochrome (1) présente une épaisseur d'au moins 100 nm.

7. Absorbeur solaire selon l'une des revendications 1 à 6,
**caractérisé en ce que**
la surface de l'absorbeur (2) se compose sélectivement d'aluminium, de cuivre ou similaire.

8. Absorbeur solaire selon l'une des revendications 1 à 7,
**caractérisé en ce que**
le matériau métallique se compose sélectivement d'aluminium, de cuivre, de titane, de chrome, de fer, de gallium ou similaire.

9. Absorbeur solaire selon l'une des revendications 1 à 8,
**caractérisé en ce que**
le matériau métallique pour le dopage de la couche thermochrome (1) est le même que la surface de l'absorbeur (2) métallique.

10. Procédé de production d'un absorbeur solaire selon au moins l'une des revendications précédentes présentant au moins les étapes suivantes :
- dépôt d'une couche (1) à partir d'au moins un oxyde de vanadium sur une surface de l'absorbeur (2) ;
- dopage de la couche (1) avec au moins un matériau métallique ;
- production d'un gradient de dopage à partir du matériau métallique, qui augmente en direction de la surface de l'absorbeur (2), et/ou production de proportions cristallines dans la couche (1) par soumission à une température.
